# EUROPÄISCHE PATENTSCHRIFT

(11) **EP 1 300 455 B1**
(45) Veröffentlichungstag und Bekanntmachung des Hinweises auf die Patenterteilung: **14.07.2010**
(21) Anmeldenummer: 02020123.2
(22) Anmeldetag: 13.09.2002
(51) Int. Cl.: C09J 133/08, C09J 151/00, C09J 7/02, C08G 18/62, C08J 7/02

(54) **Haftklebrige Polyacrylatharze**
Pressure sensitive polyacrylate resins
Résine de polyacrylate sensible à la pression

(30) Priorität: 02.10.2001 DE 10148731
(43) Veröffentlichungstag der Anmeldung: 09.04.2003
(73) Patentinhaber: TESA SE, 20253 Hamburg (DE)
(72) Erfinder: Husemann, Marc, 22605 Hamburg (DE); Zöllner, Stephan, 21244 Buchholz/Nordheide (DE)
(74) Vertreter: Stubbe, Andreas

(56) Entgegenhaltungen:
- DOCUMENTATION ABSTRACTS JOURNAL A. PLASTICS, POLYMERS., Bd. 1996, Nr. 02, 1996, XP002263386 GBDERWENT PUBLICATIONS, LONDON. & JP 07 331219 A (SEKISUI CHEM IND CO LTD) 19. Dezember 1995 (1995-12-19)
- DOCUMENTATION ABSTRACTS JOURNAL A. PLASTICS, POLYMERS., Bd. 1996, 1996, XP002263387 GBDERWENT PUBLICATIONS, LONDON. & JP 07 331214 A (SEKISUI CHEM IND CO LTD) 19. Dezember 1995 (1995-12-19)
- DOCUMENTATION ABSTRACTS JOURNAL A. PLASTICS, POLYMERS., Bd. 1993, Nr. 02, 1993, XP002263388 GBDERWENT PUBLICATIONS, LONDON. & JP 04 342784 A (NITTO DENKO CORP) 30. November 1992 (1992-11-30)

## Beschreibung

Die Erfindung betrifft ein haftklebriges Polyacrylat und ein Verfahren zur Herstellung einer vernetzten Haftklebemasse auf Basis von Polyacrylaten, welches sich des erfinderischen haftklebrigen Polyacrylates bedient.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Transparenz und ihre Einsatzfähigkeit in einem relativ weiten Temperaturbereich.
Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer vernetzt. Die Härtung verläuft thermisch oder durch UV-Vernetzung oder durch ES-Härtung. Der beschriebene Prozeß ist relativ Kosten-aufwendig und ökologisch bedenklich, da das Lösemittel nicht recycelt wird. Weiterhin ist -es -sehrschwierig, Haftklebebänder mit -hohem Masseauftrag blasenfreiherzustellen.
Zur Verbesserung dieser Einschränkungen wurde der Hotmelt-Prozeß entwickelt. Hier wird der Haftkleber in der Schmelze auf das Trägermaterial aufgetragen. Acrylathotmeltanwendungen sind bereits bekannt und vor langer Zeit beschrieben worden [NL 6 606 711 und NL 7 009 629].
Mit dieser neuen Technik sind aber auch Einschränkungen verbunden. Vor der Beschichtung wird der Haftklebemasse das Lösemittel in einem Trocknungsextruder entzogen. Der Trocknungsprozeß ist mit einer relativ hohen Temperatur und Schereinwirkung verbunden, so daß besonders hochmolekulare Polyacrylathaftklebemassen stark geschädigt werden.

Die Acrylathaftklebemasse vergelt oder der niedermolekulare Anteil wird durch Molekulargewichtsabbau stark angereichert wird. Beide Effekte sind unerwünscht. Die Klebemasse läßt sich entweder nicht mehr beschichten oder die klebtechnischen Eigenschaften der Haftklebemasse verändern sich, da z.B. im Schertest die niedermolekularen Anteile als Gleitmittel wirken und so zu einem vorzeitigen Versagen der Klebemasse führen. Dies kann auch nicht durch eine effiziente Vernetzung ausgeglichen werden. Prinzipiell können Acrylathotmelts durch UV-Licht oder noch energiereichere Strahlung , wie z.B. Elektronenstrahlen, vernetzt werden. Beide Methoden weisen gewisse Nachteile auf. UV-Licht kann durch die Eigenabsorption der Polyacrylate die Haftklebemasse nur bis zu maximal ca. 100 µm durchdringen. Da gerade die Hotmelt-Technologie Vorteile für Haftklebebänder mit besonders hohen Masseaufträgen aufweist, ergibt sich hieraus ein besonderer Nachteil. Dieser Effekt wird zudem noch durch Harze verstärkt, die häufig Polyacrylathaftklebemassen zur Steigerung der Klebkraft zugesetzt werden. Die Elektronenstrahlvernetzung weist dagegen andere Nachteile auf. Neben dem deutlich höheren apparativen Aufwand benötigt die relativ wenig selektive ES-Bestrahlung Polyacrylate mit hohem mittleren Molekulargewicht, die dann statistisch vernetzt werden. Dagegen werden zur ES-Vernetzung von niedermolekularen Acrylathaftklebemassen sehr hohe Dosen benötigt, die aber zu sehr engmaschigen Netzwerken mit Lackeigenschaften führen. Ein weiterer Nachteil sind Fragmente, die durch Spaltung der Esterseitenketten durch die energiereiche Strahlung entstehen. Solche leichtflüchtigen Fragmente können zu unangenehmen Geruchsbelästigungen aus dem Haftklebeband führen.
Die thermische Vernetzung von Acrylathotmelts ist dagegen bedeutend schwieriger und mit Problemen behaftet, da die meisten Vernetzungsreagenzien bereits im Hotmelt-Prozeß abreagieren und somit die Haftklebemassen vor der Beschichtung vergelen. Im Patent DE 195 24 250 A1 werden Isocyanate zur thermischen Vernetzung von Acrylathotmelts eingesetzt. Diese Verbindungen sind durch ihre hohe Funktionalitätskonzentration jedoch sehr reaktiv und schwer im Hotmelt-Prozeß einzuarbeiten und zu stabilisieren. Isocyanatfunktionalisierte Partikel weisen dagegen durch die geringere Anzahl der reaktiven Gruppen sowie durch die sterischen Hinderungen eine bedeutend geringere Reaktivität auf und besitzen daher eine längere "Pot-Life" im Hotmelt-Prozeß. Ferner können durch die Wahl des Partikel-Substrates die klebtechnischen Eigenschaften der Acrylathaftklebemasse positiv im Hinblick auf z.B. Kohäsion beeinflusst werden.
Partikel werden sehr häufig in Acrylathaftklebemassen beigemischt. Es können z.B. in der Hitze ausdehnbare Mikropartikel [US 5,441,810] eingesetzt werden, die sich nach Temperatureinwirkung ausdehnen und eine leichtere Entfernung vom Substrat erlauben.

Diese Partikel tragen aber nicht zur Vernetzung der Haftklebemasse bei. Daneben finden auch viele Partikel Einsatz als klebrige Zusatzkomponenten [US 3,857,731]. Diese werden z.B. nach Bohnel [US 4,166,152] im Emulsionspolymerisationsverfahren hergestellt. Auch klebrige Mikropartikel sind für Haftklebeanwendungen bereits eingesetzt worden [US 4,810,763]. Für repositionierbare Haftklebeflächen wurden Mikrokugeln aus PMMA und Polyacrylsäure eingesetzt [US 4,735,837]. Um eine optimale Repositionierbarkeit zu erhalten, wurden die Anteile der Kugeln zur Haftklebemasse variiert. In keinem Verfahren wurden Kugeln oder Partikeln zur Vernetzung von Acrylatschmelzhaftklebern eingesetzt. In Verbindung mit einem Hotmelt-Verfahren sind klebrige Partikel zu Hotmeltklebemassen zugesetzt worden [US 4,049,483]. Neben Polymer-Partikeln lassen sich aber auch Glaskugeln in Klebemassen einsetzen [US 4,223,067].

Die JP 04 342784 A beschreibt die Zugabe acrylischer Polymerpartikeln zu einer alkoholischen Dispersion eines acrylischen Polymers und Alkoxysiloxanverbindungen.
Die chemische Einbindung dieser Partikeln wird nicht beschrieben.
Die JP 07 331214 A und JP 07 331219 A beschreiben die Anwesenheit funktionalisierter Partikeln in Klebezusammensetzungen, offenbaren aber keine vorvernetzten Partikeln und nicht die chemische Einbindung vorvernetzter Partikeln in die Haftklebemasse während der Vernetzung der Klebemassen.
Funktionalisierte Partikel werden dagegen in der kombinatorischen Chemie und der Biochemie eingesetzt; exemplarisch seien hier nur die Patente US 6,168,913 und die dort zitierten Literaturstellen und Patente sowie die Patente US 6,147,159 und 6,114,493 genannt.

Aufgabe der Erfindung ist es, ein verbessertes Verfahren zur Herstellung von Acrylathaftklebemassen und eine geeignetes Ausgangsmaterial hierfür zur Verfugung zu stellen.

Es ist nun für den Fachmann überraschend entdeckt worden, daß solche für die kombinatorische Chemie speziell entwickelten Partikeln hervorragend zur thermischen Vernetzung von Acrylathotmelts geeignet sind und neben der thermischen Vernetzung durch die Partikelstruktur eine Steigerung der kohäsiven Eigenschaften bewirken.

Die Erfindung betrifft entsprechend haftklebrige Polyacrylate nach einer an sich bekannten Zusammensetzung, der vernetzte und funktionalisierte Polymerpartikeln zugesetzt sind, welche aufgrund ihrer chemischen Beschaffenheit geeignet sind, eine Vernetzungsreaktion der Polyacrylate zu unterstützen und somit zur Herstellung Haftklebemassen dienen.
Bevorzugt werden hierzu haftklebrige Polyacrylate eingesetzt, welche durch radikalische Polymerisation einer Monomermischung enthaltend zumindest folgende Komponenten
(a) 60 bis 99 Gew.-% Acrylsäure und Methacrylsäure-Derivate gemäß der folgenden Formel

   CH₂=C(R₁)(COOR₂) (I)

   wobei R₁ = H oder CH₃ ist und R₂ = eine Alkylkette mit 1 bis 20 C-Atomen.
(b) 1 bis 10 Gew.-% Vinyl-, Acryl- und/oder Methacrylat-Monomere mit einer zur chemischen Kopplung befähigten Gruppe X,
nach einem an sich bekannten Verfahren erhältlich sind.
Die Polymerpartikeln enthalten mindestens zwei funktionelle Gruppen Y und Z die mit der funktionellen Gruppe X zu der chemischen Kopplung in Form einer Substitutions- oder Additionsreaktion befähigt sind. In diesem Sinne beinhaltet die Bezeichnung "chemische Kopplung" insbesondere Additions- und Substitutionsreaktionen (insbesondere Ver- und Umesterungsreaktionen), wobei bei den Substitutionsreaktionen ganze Gruppen oder Teile abgespalten werden können.

Als Monomere für die Komponente (b) werden Verbindungen eingesetzt, die zumindest eine funktionelle Gruppe X tragen, die zu einer chemischen Kopplung mit den Polymerartikeln im Sinne von Substitutions- und/oder Additionsreaktionen mit den Gruppen Y und/oder Z befähigt sind. Diese Reaktionen fördern bei Zufuhr thermischer Energie eine Vernetzung der Haftklebemasse. Für eine effektive Vernetzung können die Polymerpartikeln vorteilhaft auch mehr als zwei funktionelle Gruppen aufweisen, welche mit den Gruppen X reagieren können, hierdurch kann die Menge der zugegebenen Polymerpartikeln zur Erzielung eines gewünschten Vernetzungsgrades reduziert werden.
Solche Gruppen X sind in hervorragender Weise beispielsweise: Carbonsäuregruppen, Hydroxygruppen, Amine, Amide, Isocyanate, Imide, Aldehyde, Thiole, ohne sich durch diese Aufzählung unnötig beschränken zu wollen. Exemplarisch seien hier einige Beispiele genannt: N-Vinylformamid, Vinylpyridine, Acrylsäure, Hydroxyethylacrylat, Hydroxyethylmethacrylat.

Für eine bevorzugte Ausführungsform der erfindungsgemäßen haftklebrigen Polyacrylate enthält die Monomermischung nach als weitere Komponente
(c) bis zu 30 Gew.-% Vinylverbindungen mit funktionellen Gruppen, wie Styrol, StyrolDerivate, Vinylacetat, etc.

Hierfür eignen sich insbesondere eine oder mehrere Vinylverbindungen gewählt aus der folgenden Gruppe:
Vinylester, Vinylhalogenide, Vinylidenhalogenide, Nitrile ethylenisch ungesättigter Kohlenwassserstoffe.
Als Beispiele für derartige Vinylverbindungen seien hier genannt Vinylacetat, Ethylvinylether, Vinylchlorid, Vinylidenchlorid, Acrylonitril, ohne sich durch diese Aufzählung unnötig beschränken zu wollen. Weiterhin können alle weiteren Vinylverbindungen, welche unter die oben angeführte Gruppe fallen, eingesetzt werden, aber auch alle anderen Vinylverbindungen, die nicht in die oben genannten Verbindungsklassen fallen.

Die Menge der zugesetzten Polymerpartikeln wird vorteilhaft derart gewählt, daß ihr Anteil an der Mischung Polyacrylat/Polymerpartikeln bis zu 30 Gew.-%, bevorzugt bis zu 25 Gew.-%, bevorzugter bis zu 10 Gew.-%, sehr bevorzugt bis zu 5 Gew.-% beträgt. Über die Menge der zugesetzten Polymerpartikeln läßt sich der gewünschte Vernetzungsgrad und somit die Härte und die Klebrigkeit der resultierenden vernetzten Haftklebemasse einstellen.

Die Polymerpartikeln mit zur Vernetzung befähigten Funktionalitäten können prinzipiell aus der Gruppe aller vernetzten Polymerpartikeln mit solchen funktionellen Gruppen ausgewählt werden. Die Partikeln können dabei in unsymmetrischer als auch in symmetrischer Form, insbesondere in Kugelform, vorliegen. Die Größe der Partikeln sollte unterhalb der Schichtdicke der späteren Acrylathaftklebemasse liegen, wenn diese auf einen Träger aufgetragen ist. In besonderen Fällen kann es von Vorteil sein, daß größere Partikeln eingesetzt werden um z.B. repositionierbare Haftklebebänder herzustellen.
Bevorzugt werden Polymerpartikeln mit einer Größe von 1 bis 500 µm, mehr bevorzugt von 50 bis 200 µm, sehr bevorzugt von 75 bis 150 µm eingesetzt.
Bei im wesentlich runden Partikeln ist mit "Größe" der Durchmesser der Partikeln gemeint, bei nicht kugelförmigen oder unsymmetrischen Partikeln handelt es sich um die Länge über die längste Ausdehnung der Partikeln, bei stäbchenförmigen Partikeln also beispielsweise um die Länge der Längsachse. Die Größen werden dabei bevorzugt mit der Maßgabe gewählt, daß sie die Schichtdicke der Haftklebemasse bei einer späteren Beschichtung auf ein Trägermaterial nicht überschreiten.
Lassen sich die mit den Polymerartikeln versehenen Polyacrylate durch geeignete Verfahren vor, bei oder nach der Beschichtung derart orientieren, daß die Partikelausrichtung in der Schicht eine Vorzugsrichtung aufweist, so kann die Größe der Partikeln auch derart gewählt werden, daß sie die Schichtdicke der Haftklebemasse überschreitet, ohne daß die Partikeln aus der Schicht herausragen und sich störend in Hinblick auf ein homogenes oder glattes Beschichtungsbild auswirken.

Als funktionelle Gruppen Y und Z lassen sich unabhängig voneinander beispielsweise Hydrazine, Amine, Phenole, Tosylchloride, Isocyanate, Aldehyde, Carbonate, Phosphine, Carbodiimide, N-Methylmorpholine, Oxazolidin oder Sulfonsäuregruppen, ohne sich durch diese Aufzählung einschränken zu wollen.

Für Schmelzhaftkleber kann es von besonderem Vorteil sein, als funktionelle Gruppen Isocyanatgruppen einzusetzen, die blockiert sind. In US 5,510,443 werden einige Varianten zur Blockierung von Isocyanaten beschrieben. Unter blockierten Isocyanaten sind funktionelle Gruppen zu verstehen, die unter Temperatureinfluß Isocyanatgruppen bilden und somit eine Reaktion initiieren.
Die Kopplungsreaktionen zwischen den funktionellen Gruppen X der Polyacrylates und den funktionellen Gruppen Y bzw. Z der Polymerpartikeln können insbesondere sowohl Additions- als auch Substitutionsreaktionen darstellen.

Auf folgenden Reaktionen soll in diesem Zusammenhang besonders hingewiesen werden, die Liste ist jedoch nicht abschließend und soll lediglich dazu dienen, die Erfindung anhand einiger beispielhafter Kopplungsreaktionen näher zu erläutern:

| | | |
|---|---|---|
| Polyacrylatseitige Gruppe X | Gruppe Y bzw. Z in Polymerpartikeln | Reaktionstyp |
| Anhydrid- | Hydroxy-, Alkoxy-, Mercapto-, Thioether-, Isocyanat-, Amino-, Oxazol-, ... | Addition |
| Säure- Ester- | Hydroxy- Amino- | Um- und Veresterungen (Substitution) |
| Hydroxy- Säure- | Isocyanat- | Addition |

Es sei hier darauf hingewiesen, daß die vorstehend als Y bzw. Z definierten Gruppen auch im Sinne der Gruppen X des Polyacrylates vorliegen können und die vorstehend als X definierten funktionellen Gruppen dann entsprechend der Gruppen Y bzw. Z der Polymerpartikeln dienen. Das zu diesen Gruppen gesagte gilt dann entsprechend in umgekehrter Weise.

Die Partikeln bestehen aus Polymeren, die sehr unterschiedliche statische Glasübergangstemperaturen aufweisen können. Polymere mit einer statischen Glasübergangstemperatur von kleiner 25 °C können klebrige Eigenschaften bei Raumtemperatur aufweisen und somit die klebtechnischen Eigenschaften beeinflussen. Sehr bevorzugt werden aber Polymere mit einer Glasübergangstemperatur von größer 25 °C eingesetzt. Beispiele hierfür sind Kugeln aus PMMA (Polymethylnethacrylat) oder Polystyrol. Diese Kugeln werden z.B. über Emulsionspolymerisationen hergestellt und sind vernetzt.

In einem weiteren bevorzugten Beispiel werden Resins der Firma Argonaut Technologies eingesetzt. Diese Resins können z.B. als funktionelle Gruppen Hydrazine, Amine, Phenole, Tosylchloride, Isocyanate, Aldehyde, Carbonate, Phosphine, Carbodiimide, N-Methylmorpholine, Oxazolidin oder Sulfonsäuregruppen enthalten, ohne sich durch diese Aufzählung einschränken zu wollen. In einer sehr bevorzugten Ausführung für die erfindungsgemäße Haftklebmassse werden die PS-Isocyanate™ Resins (Fa. Argonaut Technologies) eingesetzt.

Erfindungsgemäß wird weiterhin ein Verfahren zur Herstellung einer vernetzten Haftklebemasse auf Basis von Polyacrylaten beansprucht, bei welchem
- ein Polyacrylat durch radikalische Polymerisation einer Monomermischung enthaltend zumindest folgende Komponenten
   (a) 60 bis 99 Gew.-% Acrylsäure und Methacrylsäure-Derivate gemäß der folgenden Formel

      CH₂=C(R₁)(COOR₂) (I)

      wobei R₁ = H oder CH₃ ist und R₂ = eine Alkylkette mit 2 bis 20 C-Atomen.
   (b) 1 bis 10 Gew.-% Vinyl-, Acryl- und/oder Methacrylat-Monomere mit einer zur chemischen Kopplung befähigten Gruppe X,
      nach einem an sich bekannten Verfahren hergestellt wird, so daß das Polyacrylat freie Gruppen X aufweist,
- die Haftklebemasse zu einer Schmelze mit einem Lösungsmittelgehalt < 2 Gew.-% aufkonzentriert wird,
- die Haftklebemasse aus in der Schmelze unterhalb einer kritischen Reaktionstemperatur T mit vernetzten und funktionalisierten Polymerpartikeln in einem Meßkneter abgemischt wird, wobei die Polymerpartikeln mindestens zwei funktionelle Gruppen Y und Z enthalten, die mit der funktionellen Gruppe X zu einer chemischen Kopplung in Form einer Substitutions- oder Additionsreaktion befähigt sind,
- eine Vernetzungsreaktion derart durchgeführt wird, indem die Temperatur der Haftklebemasse auf zumindest die kritische Reaktionstemperatur T gebracht wird, so daß die Kopplungsreaktion zwischen der funktionellen Gruppe X des Polyacrylates und den funktionellen Gruppen Y und Z der Polymerpartikeln erzielt wird.

In hervorragender Weise werden in dem erfinderischen Verfahren als funktionelle Gruppen X und/oder als funktionelle Gruppen Y und/oder Z blockierte Isocyanatgruppen verwendet.

Das Verfahren dient also bevorzugt dazu, über die erfindungsgemäßen mit Polymerpartikeln versehenen Polyacrylate ein Verfahren zur Herstellung vernetzter Haftklebemassen einzusetzen. Die Kohäsion der Haftklebemasse wird zum einen durch die Vernetzung und - für den Fall das Polymerpartikel mit einer hohen Glasübergangstemperatur eingesetzt werden - durch Einbindung der Polymerpartikel die viskoelastischen Eigenschaften verändert werden.

Der Monomermischung kann dabei vorteilhaft entsprechend die Komponente (c) zugesetzt werden.

Für die Monomermischung, die Komponenten (a), (b) und (c) sowie die Gruppen X, Y und Z gilt das bereits vorstehend gesagte entsprechend, ebenso das bezüglich der Polymerpartikeln näher dargelegte.

Die kritische Temperatur T ist dabei derart definiert, daß unterhalb der kritischen Temperatur (im Heißschmelzprozeß) eine Reaktion zwischen den Gruppen X und den Gruppen Y und Z nicht stattfindet (oder das Gleichgewicht er Kopplungsreaktion auf Seiten der Edukte liegt), oberhalb der kritischen Temperatur aber eine Reaktion mit hinreichender Geschwindigkeit stattfindet, um zu einer ausreichenden Vernetzung der Polyacrylate zu führen. So kann die kritische Temperatur also im wesentlichen der Aktivierungsenergie der Kopplungsreaktion entsprechen.

Zur Polymerisation werden die Monomere dermaßen gewählt, daß die resultierenden Polyacrylate als industriell verwendbare Haftklebemassen eingesetzt werden können, insbesondere derart, daß die resultierenden Polyacrylate haftklebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polyacrylates vorteilhaft unterhalb 25 °C liegen.

Die Polymerisation kann in Gegenwart eines oder mehrerer organischer Lösungsmittel und/oder in Gegenwart von Wasser durchgeführt werden. In einer vorteilhaften Ausführungsform des Verfahrens liegen zusätzliche Colösungsmittel oder Tenside, wie Glycole oder Ammoniumsalze von Fettsäuren, vor.
Bevorzugte Verfahren verwenden möglichst wenig Lösungsmittel. Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, -butyl-, oder -hexylester), halogenierte Kohlenwasserstoffe (Chlorbenzol), Alkanole (Methanol, Ethanol, Ethylenglycol, Ethylenglycolmonomethylether) und Ether (Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die hergestellten Polyacrylate weisen bevorzugt ein mittleres Molekulargewicht M_{w} (Gewichtsmittel) von 100.000 bis 1.200.000 g/mol, mehr bevorzugt zwischen 250.000 und 400.000 g/mol auf. Die Bestimmung des mittleren Molekulargewichtes M_{w} erfolgt über Größenausschlußchromatographie (Gelpermeationschromatographie, GPC) oder Matrixunterstützte Laser-Desorption/Ionisations-Massenspektrometrie (MALDI-MS).

Anschließend wird dem Polymerisat das Lösemittel entzogen und die Polyacrylatmasse bevorzugt als Acrylathotmelt (Heißschmelzmasse) weiterverarbeitet.

Hierfür werden die wie im vorhergehenden beschrieben hergestellten Polyacrylate zu einer Polyacrylatmasse aufkonzentriert, deren Lösungsmittelgehalt ≤2 Gew.-% ist. Dieser Prozeß findet bevorzugt in einem Aufkonzentrationsextruder statt.

In einer alternativen Vorgehensweise kann das haftklebrige Polyacrylat auch aus Lösung weiterverarbeitet werden.

Die Mischung der funktionalisierten Polymerpartikeln erfolgt in Abhängigkeit von der Viskosität des Acrylathotmelts. Neben dynamischen Mischern können z.B. auch Extruder, wie z.B. Doppelschneckenextruder, eingesetzt werden. Daneben lassen sich auch Kneter verwenden. Generell sollte das Schergefälle möglichst gering sein, damit die Polymerpartikeln unter Scherung nicht zerstört werden. Ferner können die zugesetzten Polymerpartikeln als Verarbeitungshilfsmittel im Hotmelt-Prozeß dienen. Im Sinne eines Kugellagereffektes würde die Fließviskosität des zu verarbeitenden Acrylathotmelts herabgesetzt werden und somit die schädigenden Scherung vermindert werden.

Weiterhin kann auch die Acrylathaftklebemasse in Lösung mit den funktionalisierten Polymerpartikeln dispergiert werden.

Für die Verwendung der nach dem erfinderischen Verfahren hergestellten Polyacrylate als Haftklebemassen werden die Polyacrylate zur Optimierung optional mit zumindest einem Harz abgemischt. Die Beimischung des oder der Harze kann vor oder nach der Beimischung der funktionalisierten Polymerpartikeln erfolgen. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze, Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwickung werden zu der Haftklebemasse ein oder mehrere Weichmacher, wie z.B. niedermolekulare Polyacrylate, Phthalate, Walöweichmacher oder Weichharze hinzudosiert.

Die Acrylathotmelts können des weiteren mit einem oder mehreren Additiven wie Alterungsschutzmitteln, Lichtschutzmitteln, Ozonschutzmitteln, Fettsäuren, Harzen, Keimbildnern, Blähmitteln, Compoundierungsmitteln und/oder Beschleunigern abgemischt sein.
Als Beschleuniger eignen sich z.B. Substanzen, die die thermische Vernetzung unter Zuhilfenahme der Polymerpartikeln beschleunigen können. Hier können ― je nach Reaktion ― Lewis- oder Brönstedt-Säuren oder Lewis- oder Brönstedt-Basen geeignet sein. Diese Verbindungen können auch gegebenenfalls durch UV-Strahlung in situ erzeugt werden.

Weiterhin können die Haftklebemassen mit weiteren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein.

Zusätzlich lassen sich vorteilhaft unter Strahlung vernetzende Substanzen wie z.B. bi- oder multifunktionelle Acrylate oder bi- oder multifunktionelle Urethanacrylate, bi- oder multifunktionelle Isocyanate oder bi- oder multifunktionelle Epoxide zusetzen. Verwendet werden können hier aber auch alle weiteren, dem Fachmann geläufigen bi- oder multifunktionellen Verbindungen, die in der Lage sind, Polyacrylate zu vernetzen. Als Photoinitiatoren eignen sich bevorzugt Norrish-Typ I - und -Typ II ―Spalter, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, wobei diese Aufzählung keinen Anspruch auf Vollständigkeit besitzt.

Insbesondere für die Verwendung als Haftklebemasse ist es für das erfinderische Verfahren vorteilhaft, wenn das Polyacrylat bevorzugt aus der Schmelze auf einen Träger oder auf ein Trägermaterial als Schicht aufgebracht wird.
Generell sollte die Beschichtung durch eine Düse oder durch eine Walze möglichst kurz nach der Beimischung der funktionalisierten Polymerpartikeln erfolgen, um Vernetzungen oder Vergelungen während des Hotmeltprozesses zu vermeiden.

Alternativ kann die mit den zur thermischen Vernetzung befähigten Polymerpartikeln versehende Acrylathaftklebemasse konventionell aus Lösung über einen Streichbalken oder als high solid über eine Düse aufgetragen und anschließend das Lösemittel verdampft werden.

Als Trägermaterialien für die Haftklebemasse, beispielsweise für Klebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Eine Weiterentwicklung des erfindungsgemäßen Verfahrens ist die thermische Vernetzung durch die funktionalisierten Polymerpartikeln. Hier ist es von besonderem Vorteil, daß das Haftklebeband nach der thermischen Vernetzung nochmals in einem Wärmekanal oder - tunnel erhitzt wird. Die Temperatur sollte hier oberhalb der Aktivierungstemperatur liegen, die für eine thermische Vernetzung der obengenannten Polymerpartikeln benötigt wird. In einer sehr bevorzugten Auslegung liegt die Temperatur oberhalb 100 °C, in einer äußerst bevorzugten Auslegung oberhalb 140 °C. Die aufzubringende Temperatur kann durch das Trägermaterial des Haftklebebandes limitiert werden. Generell sind thermische Zersetzungen des Trägermaterials zu vermeiden.

Weiter kann vorteilhaft eine UV-Vernetzung mittels kurzzeitiger ultravioletter Bestrahlung in einem Wellenlängenbereich von 200 bis 400 nm, insbesondere unter Verwendung von Quecksilber-Hochdruck- oder -Mitteldruck-Lampen bei einer Leistung von 80 bis 240 W/cm, vorgenommen werden.

Im weiteren wird die Verwendung des nach dem erfinderischen Verfahren hergestellten Polyacrylates als Haftklebemasse beansprucht.

Insbesondere ist die Verwendung der wie beschrieben hergestellten Polyacrylathaftklebemasse für ein Klebeband von Vorteil, wobei die Polyacrylathaftklebemasse ein- oder beidseitig auf einem Träger aufgetragenen sein kann.

Im allgemeinen steigt durch die Vernetzung die Kohäsion des Haftklebebandes an. Dementsprechend können die nach dem erfinderischen Verfahren hergestellten Haftklebebänder für industrielle Anwendungen eingesetzt werden, die hohe Temperaturen oder hohe Scherbelastungen erfordern.

Desweiteren können durch die geeignete Wahl der Polymerpartikeln repositionierbare Haftklebebänder hergestellt werden. Dies gilt insbesondere für Haftklebebänder mit einer Schichtdicke, die unterhalb der eingesetzten Partikel- oder Kugelgrößen liegt.

Ferner können durch die geeignete Wahl der Polymerpartikeln die Klebkraft der Haftklebebänder verstärkt werden. Dies kann z.B. durch Kugeln erreicht werden, die eine statische Glasübergangstemperatur deutlich unterhalb 25 °C besitzen.

Ferner können hitzeaktivierbare Haftklebebänder hergestellt werden. Dies gilt für Klebebänder, die bei Raumtemperatur und erhöhten Temperaturen keine Anfaßklebrigkeit und Klebkraft besitzen. Durch Zusatz von Polymerpartikeln, die bei einer bestimmten erhöhten Temperatur plötzlich klebrig werden, wird durch die klebrigen Vernetzungskugeln in der ansonsten nichtklebrigen Matrix eine Klebkraft erzeugt, die das Produkt als Haftklebeband einsetzen lässt.

Weiterhin können durch den Polymerpartikelzusatz Haftklebebänder hergestellt werden, die eine verbesserte Schneid- bzw. Stanzbarkeit besitzen.

### Beispiele

### Testmethoden

Folgende Testmethoden wurden angewendet, um die klebtechnischen als auch generelle Eigenschaften der hergestellten Haftklebemassen zu evaluieren.

### 180° Klebkrafttest (Test A)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Meßergebnisse sind in N/cm angegeben und sind gemittelt aus drei Messungen. Alle Messungen wurden bei Raumtemperatur durchgeführt.

### Scherfestigkeit (Test B1;B2)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei 80 °C wurde ein 1 kg-Gewicht an dem Klebeband befestigt (B1), bei Raumtemperatur ein 2 kg-Gewicht (B2). Die gemessenen Scherstandzeiten sind in Minuten angegeben und entsprechen dem Mittelwert aus drei Messungen.

### Gelpermeationschromatographie GPC (Test C)

Die Bestimmung des mittleren Molekulargewichtes M_{w} und der Polydisperistät PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### Durchführung des Hotmeltprozeßes im Meßkneter (Methode D):

Die Mischung der Acrylathotmelts mit den Partikeln erfolgte in dem Meßkneter Rheomix 610p der Fa. Haake. Als Antriebseinheit stand das Gerät Rheocord RC 300p zur Verfügung. Gesteuert wurde das Gerät mit der Software PolyLab System. Der Kneter wurde jeweils mit 52 g lösungsmittelfreier Acrylathaftklebemasse (∼80 % Füllgrad) und gegebenenfalls mit der in den Beispielen beschriebenen Mengen Resins der Fa. Argonaut Technologies befüllt. Die Versuche wurden bei einer Knettemperatur von 100 °C, einer Umdrehungszahl von 40 U/min und einer Knetzeit von 30 Sekunden durchgeführt. Anschließend wurden die Muster über einen Hotmelt-Coater mit zwei beheizbaren Walzen auf eine 23 µm dicke mit einem Saran-Primer versehende PET-Folie mit einem Masseauftrag von 150 g/m² beschichtet, für 15 Minuten mit 130 °C in einem Trockenschrank erhitzt und dann klebtechnisch nach den Testmethoden A und B1/B2 ausgeprüft.

### Polymerkugeln

Als funktionalisierte Polymerkugeln wurden die Polymer PS-Isocyanate Resins™ der Fa. Argonaut Technologies eingesetzt. Diese Resins sind zu 1 % vernetzt, besitzen eine Funktionalität von 1,0 bis 1,7 mmol/g Polymer und eine Größe von 75 bis 150 Microns.

### Beispiel 1a und 1b

Ein für radikalische Polymerisationen konventioneller 200 L-Reaktor wurde mit 5 kg Acrylsäure, 45,0 kg 2-Ethylhexylacrylat, und 30 kg Aceton/Siedegrenzbenzin 60/95 (1:1) befüllt. Nach 45 Minuten Durchleiten mit Stickstoffgas unter Rühren wurde der Reaktor auf 58 °C hochgeheizt und 20 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 20 g AIBN hinzugegeben. Nach 2,5 h und 5 h wurde mit jeweils 15 kg Aceton/Siedegrenzbenzin 60/95 (1:1) verdünnt. Die Reaktion wurde nach 48 h Reaktionszeit abgebrochen und auf Raumtemperatur abgekühlt. Anschließend wurde ein Teil der Haftklebemasse in einem Trockenvakuumschrank bei 10 Torr und 50 °C über 24 h zu einem Hotmelt aufkonzentriert.
Für Beispiel 1a wurde der reine Hotmelt ohne Resins-Zusatz nach Methode D weiter zum Haftklebeband verarbeitet.
Für Beispiel 1b wurden 2 g des Resins PS-Isocyanate™ der Fa. Argonaut Technologies nach Methode D eingemischt und weiter zum Haftklebeband verarbeitet.

### Beispiel 2a, 2b und 2c

Die Herstellung erfolgte analog Beispiel 1. Zur Polymerisation wurden 5 kg Acrylsäure, 45 kg n-Butylacrylat und 30 kg Aceton/Siedegrenzbenzin 60/95 (1:1) eingesetzt. Im weiteren Verlauf wurden die identischen Lösungsmittel- und Initiatormengen wie in Beispiel 1 angegeben verwendet. Nach dem Aufkonzentrationsprozess wurde analog Beispiel 1 vorgegangen.
Für Beispiel 2a wurde der reine Hotmelt ohne Resins Zusatz nach Methode C weiter zum Haftklebeband verarbeitet.
Für Beispiel 2b wurden 2 g des Resins PS-Isocyanate™ der Fa. Argonaut Technologies nach Methode D eingemischt und weiter zum Haftklebeband verarbeitet.
Für Beispiel 2c wurden 3 g des Resins PS-Isocyanate™ der Fa. Argonaut Technologies nach Methode D eingemischt und weiter zum Haftklebeband verarbeitet.

### Beispiel 3a, 3b und 3c

Die Herstellung erfolgte analog Beispiel 1. Zur Polymerisation wurden 1 kg Acrylsäure, 24.5 kg 2-Ethylhexylacrylat, 24.5 kg n-Butylacrylat und 30 kg Aceton/Siedegrenzbenzin 60/95 (1:1) eingesetzt. Im weiteren Verlauf wurden die identischen Lösungsmittel- und Initiatormengen wie in Beispiel 1 angegeben verwendet. Nach dem Aufkonzentrationsprozess wurde analog Beispiel 1 vorgegangen.
Für Beispiel 3a wurde der reine Hotmelt ohne Resins Zusatz nach Methode D weiter zum Haftklebeband verarbeitet.
Für Beispiel 3b wurden 2 g des Resins PS-Isocyanate™ der Fa. Argonaut Technologies nach Methode D eingemischt und weiter zum Haftklebeband verarbeitet.
Für Beispiel 3c wurden 4 g des Resins PS-Isocyanate™ der Fa. Argonaut Technologies nach Methode D eingemischt und weiter zum Haftklebeband verarbeitet.

### Resultate

Erfindungsgegenstand ist ein Polyacrylat mit Zusatz funktionalisierter Polymerpartikeln, ein Verfahren zur Herstellung von Acrylathaftklebemassen unter Zuhilfenahme dieser Polyacrylate und die Verwendung der resultierenden Haftklebemasse für Acrylathaftklebebänder. Eine Polyacrylatmasse wird mit funktionalisierten, nicht-klebrigen, vernetzten und kugelförmigen Partikeln abgemischt, als Haftklebemasse auf ein oder mehrere Trägermaterialien beschichtet, und anschließend wird durch thermische oder UV-Aktivierung eine Vernetzungsreaktion initiiert. Durch die Vernetzung steigt die Kohäsion der Haftklebemasse und damit auch des entsprechenden Haftklebebandes. Ferner wird die Schneidbarkeit von hochtackigen Haftklebemassen durch diesen Prozeß verbessert.

Die Beispiele 1a, 2a und 3a dienen zur Referenz und verdeutlichen, daß die unvernetzten Muster nahezu keine Scherfestigkeit besitzen (s. Tabelle 1). Dagegen wird durch den Zusatz der PS-Resins™ eine deutliche Verbesserung erzielt. Diese Resins lassen sich durch einen Knetprozess leicht in der Wärme einarbeiten, ohne daß die Haftklebemasse vergelt. Nach der Beschichtung kann über eine anschließende Temperierung bei höheren Temperaturen eine Reaktion der Isocyanat-Gruppen der PS-Resins™ erzielt werden, und somit tritt eine deutliche Vernetzung ein. Tabelle 1 kann entnommen werden, daß sich dies in einem drastischen Anstieg der Scherstandzeiten äußert.

| Tabelle 1 | | | |
|---|---|---|---|
| Beispiel | SSZ (80°C, 10 N) Test B1 | SSZ (RT, 20 N) Test B2 | KK-Stahl [N/cm] Test A |
| 1a | <5 | <5 | 8.2 |
| 1b | +10000 | 3570 | 6.8 |
| 2a | <5 | <5 | 8.8 |
| 2b | +10000 | 6495 | 6.6 |
| 2c | +10000 | +10000 | 5.9 |
| 3a | <5 | <5 | 9.5 |
| 3b | +10000 | +2535 | 7.1 |
| 3c | +10000 | +4270 | 6.3 |

| | | | |
|---|---|---|---|
| SSZ: Scherstandzeiten RT: Raumtemperatur KK: Klebkraft | | | |

Die Scherstandzeiten steigen von weniger als 5 Minuten bei einer Scherkraft von 10 N bei 80 °C (Test B1) auf deutlich über 10.000 Minuten für alle Beispiele an. Auch mit einer Scherkraft von 20 N bei Raumtemperatur (Test B2) ist eine Verbesserung von weniger als 5 Minuten auf bis zu größer 10.000 Minuten (Beispiel 2c) ersichtlich. Somit lassen sich auch Acrylathotmelts thermisch sicher im Extrusionsprozeß vernetzen, zudem werden Eigenschaftsverbesserungen erzielt. Die Klebkraft auf Stahl (Test A) nimmt dagegen mit steigender Scherfestigkeit deutlich ab, was wiederum leicht über das veränderte viskoelastische Verhalten erklärt werden kann.

## Patentansprüche

1. Mischung eines haftklebrigen Polyacrylats, das durch radikalische Polymerisation einer Monomermischung enthaltend zumindest folgende Komponenten
(a) 60 bis 99 Gew.-% Acrylsäure und Methacrylsäure-Derivate gemäß der folgenden Formel
CH₂=C(R₁)(COOR₂) (I)
wobei R₁ = H oder CH₃ ist und R₂ = eine Alkylkette mit 1 bis 20 C-Atomen.
(b) 1 bis 10 Gew.-% Vinyl-, Acryl- und/oder Methacrylat-Monomere mit einer zur chemischen Kopplung befähigten Gruppe X,
nach einem an sich bekannten Verfahren erhältlich ist, mit vernetzten Polymerpartikeln, die mindestens zwei funktionelle Gruppen Y und Z enthalten, die geeignet sind, mit der funktionellen Gruppe X eine chemische Kopplungsreaktion in Form einer Substitutions- oder Additionsreaktion einzugehen.

2. Mischung nach Anspruch 1, **dadurch gekennzeichnet, dass**
die Menge der zugesetzten Polymerpartikeln, bezogen auf das Polyacrylat mit zugesetzten Polymepartikeln, bis zu 30 Gew.-%, bevorzugt bis zu 25 Gew.-%, bevorzugter bis zu 10 Gew.-%, sehr bevorzugt bis zu 5 Gew.-% beträgt.

3. Mischung nach zumindest einem der vorangehenden Ansprüche, **dadurch gekennzeichnet, daß**
die Monomermischung als weitere Komponente
(c) bis zu 30 Gew.-% Vinylverbindungen mit funktionellen Gruppen, wie Styrol, StyrolDerivate, Vinylacetat enthält.

4. Mischung nach zumindest einem der vorangehenden Ansprüche, **dadurch gekennzeichnet, daß**
die Polymerpartikeln eine Größe von 10 bis 500 µm, bevorzugt von 50 bis 200 µm, sehr bevorzugt von 75 bis 150 µm aufweisen.

5. Mischung nach zumindest einem der vorangehenden Ansprüche, **dadurch gekennzeichnet, daß**
als Polymerpartikeln Polymethylmethecrylat- und/oder Polystyrolpartikeln eingesetzt werden.

6. Mischung nach mindestens einem der vorangegangenen Ansprüchen, **dadurch gekennzeichnet, daß**
die funktionellen Gruppen Y und Z der Polymerpartikeln unabhängig voneinander aus der folgenden Aufzählung gewählt werden:
Hydrazine, Amine, Phenole, Tosylchloride, Isocyanate, Aldehyde, Carbonate, Phosphine, Carbodiimide, N-Methylmorpholine, Oxazolidine oder Sulfonsäuregruppen.

7. Verfahren zur Herstellung einer vernetzten Haftklebemasse auf Basis von Polyacrylaten, **dadurch gekennzeichnet, daß**
- ein Polyacrylat durch radikalische Polymerisation einer Monomermischung enthaltend zumindest folgende Komponenten
(a) 60 bis 99 Gew.-% Acrylsäure und Methacrylsäure-Derivate gemäß der folgenden Formel
CH₂=C(R₁(COOR₂) (I)
wobei R₁ = H oder CH₃ ist und R₂ = eine Alkylkette mit 2 bis 20 C-Atomen.
(b) 1 bis 10 Gew.-% Vinyl-, Acryl- und/oder Methacrylat-Monomere mit einer zur chemischen Kopplung befähigten Gruppe X,
nach einem an sich bekannten Verfahren hergestellt wird, so daß das Polyacrylat freie Gruppen X aufweist,
- die Haftklebemasse zu einer Schmelze mit einem Lösungsmittelgehalt < 2 Gew.-% aufkonzentriert wird,
- die Haftklebemasse aus in der Schmelze unterhalb einer kritischen Reaktionstemperatur T mit vernetzten und funktionalisierten Polymerpertikeln in einem Meßkneter abgemischt wird, wobei die Polymerpartikeln mindestens zwei funktionelle Gruppen Y und Z enthalten, die mit der funktionellen Gruppe X zu einer chemischen Kopplung in Form einer Substitutions- oder Additionsreaktion befähigt sind,
- eine Vernetzungsreaktion derart durchgeführt wird, indem die Temperatur der Haftklebemasse auf zumindest die kritische Reaktionstemperatur T gebracht wird, so daß die Kopplungsreaktion zwischen der funktionellen Gruppe X des Polyacrylates und den funktionellen Gruppen Y und Z der Polymerpertikeln erzielt wird.

8. Verfahren nach Anspruch 7, **dadurch gekennzeichnet, daß**
als funktionelle Gruppen X und/oder als funktionelle Gruppen Y und/oder Z blockierte Isocyanatgruppen verwendet werden.

9. Verfahren nach zumindest einem der Ansprüche 7 oder 8, wobei das mit den Polymerpartikeln abgemischte Polyacrylat vor der Vernetzungsreaktion aus der Schmelze auf ein Trägermaterial beschichtet wird.

10. Haftklebemasse, erhältlich nach einem Verfahren nach einem der Ansprüche 7 bis 9.

11. Verwendung einer nach einem Verfahren nach zumindest einem der Ansprüche 7 bis 9 hergestellten Haftklebemasse für ein ein- oder doppelseitiges Klebeband.

## Claims

1. Mixture of a pressure sensitively adhesive polyacrylate which is obtainable by free radical polymerization of a monomer mixture comprising at least the following components
(a) from 60 to 99% by weight of acrylic acid and methacrylic acid derivatives of the formula
CH₂=C(R₁)(COOR₂) (I)
where R₁ is H or CH₃ and R₂ is an alkyl chain having from 1 to 20 carbon atoms.
(b) from 1 to 10% by weight of vinyl, acrylic and/or methacrylate monomers containing a group X capable of chemical coupling,
by a process known per se, with crosslinked polymer particles which contain at least two functional groups Y and Z, which are suitable for entering into a chemical coupling reaction with the functional group X in the form of a substitution or addition reaction.

2. Mixture according to Claim 1, **characterized in that** the amount of added polymer particles, based on the polyacrylate with added polymer particles, is up to 30% by weight, preferably up to 25% by weight, more preferably up to 10% by weight, very preferably up to 5% by weight.

3. Mixture according to at least one of the preceding claims, **characterized in that** the monomer mixture comprises as a further component (c) up to 30% by weight of vinyl compounds containing functional groups, such as styrene, styrene derivatives, vinyl acetate.

4. Mixture according to at least one of the preceding claims, **characterized in that** the polymer particles have a size of from 10 to 500 µm, preferably from 50 to 200 µm, very preferably from 75 to 150 µm.

5. Mixture according to at least one of the preceding claims, **characterized in that** said polymer particles comprise polymethyl methacrylate and/or polystyrene particles.

6. Mixture according to at least one of the preceding claims, **characterized in that** the functional groups Y and Z of the polymer particles are selected independently of one another from the following group:
hydrazines, amines, phenols, tosyl chlorides, isocyanates, aldehydes, carbonates, phosphines, carbodiimides, N-methylmorpholines, oxazolidines, and sulfonic acid groups.

7. Process for preparing a crosslinked pressure sensitive adhesive based on polyacrylates, **characterized in that**
- a polyacrylate is prepared by free radical polymerization of a monomer mixture comprising at least the following components
(a) from 60 to 99% by weight of acrylic acid and methacrylic acid derivatives of formula
CH₂=C(R₁)(COOR₂) (I)
where R₁ is H or CH₃ and R₂ is an alkyl chain having from 2 to 20 carbon atoms
(b) from 1 to 10% by weight of vinyl, acrylic and/or methacrylate monomers having a group X capable of chemical coupling,
by a process known per se, so that the polyacrylate contains free groups X,
- the pressure sensitive adhesive is concentrated to a melt having a solvent content < 2% by weight,
- the pressure sensitive adhesive is blended in the melt with crosslinked and functionalized polymer particles below a critical reaction temperature T in a measuring mixer, the polymer particles containing at least two functional groups Y and Z which are capable of chemical coupling with the functional group X in the form of a substitution or addition reaction,
- a crosslinking reaction is carried out by bringing the temperature of the pressure sensitive adhesive to at least the critical reaction temperature T so that the coupling reaction between the functional group X of the polyacrylate and the functional groups Y and Z of the polymer particles is obtained.

8. Process according to Claim 7, **characterized in that** blocked isocyanate groups are used as functional groups X and/or as functional groups Y and/or Z.

9. Process according to at least one of Claims 7 and 8, where the polyacrylate blended with the polymer particles is applied from the melt to a backing material prior to the crosslinking reaction.

10. Pressure sensitive adhesive obtainable by a process according to one of Claims 7 to 9.

11. Use of a pressure sensitive adhesive prepared by a process according to at least one of Claims 7 to 9 for a single-sided or double-sided adhesive tape.

## Revendications

1. Mélange d'un Polyacrylate adhésif, qui peut être obtenu par polymérisation radicalaire d'un mélange de monomères contenant au moins les composants suivants
(a) 60 à 99% en poids d'acide acrylique et de dérivés de l'acide méthacrylique selon la formule suivante
CH₂-C(R₁)(COOR₂) (I)
où R₁ = H ou CH₃ et R₂ = une chaîne alkyle comprenant 1-20 atomes de carbone
(b) 1 à 10% en poids de monomères de vinyle, d'acyle et/ou de méthacrylate avec un groupe X apte à un couplage chimique,
selon un procédé connu en soi, avec des particules primaires réticulées, qui contiennent au moins deux groupes fonctionnels Y et Z qui conviennent pour participer à une réaction de couplage chimique avec le groupe fonctionnel X sous forme d'une réaction de substitution ou d'addition.

2. Mélange selon la revendication 1, **caractérisé en ce que** la quantité de particules polymères ajoutées, par rapport au polyacrylate avec les particules polymères ajoutées est de jusqu'à 30% en poids, de référence jusqu'à 25% en poids, plus préférablement jusqu'à 10% en poids, très préférablement jusqu'à 5% en poids.

3. Mélange selon au moins l'une quelconque des revendications précédentes, **caractérisé en ce** le mélange de monomères contient comme autre composant (c) jusqu'à 30% en poids de composés de vinyle présentant des groupes fonctionnels, tels que le styrène, des dérivés de styrène, l'acétate de vinyle.

4. Mélange selon au moins l'une quelconque des revendications précédentes, **caractérisé en ce que** les particules polymères présentent une grosseur de 10 à 500 µm, de préférence de 50 à 200 µm, très préférablement de 75 à 150 µm.

5. Mélange selon au moins l'une quelconque des revendications précédentes, **caractérisé en ce qu'**on utilise comme particules polymères des particules de poly(méthacrylate de méthyle) et/ou de polystyrène.

6. Mélange selon au moins l'une quelconque des revendications précédentes, **caractérisé en ce que** les groupes fonctionnels Y et Z des particules polymères sont choisis indépendamment l'un de l'autre parmi la liste suivante : les hydrazines, les amines, les phénols, les chlorures de tosyle, les isocyanates, les aldéhydes, les carbonates, les phosphines, les carbodiimides, les N-méthylmorpholines, les oxazolidines ou les groupes acide sulfonique.

7. Procédé pour la préparation d'une masse autoadhésive réticulée à base de polyacrylates, **caractérisé en ce que**
- un polyacrylate est préparé par polymérisation radicalaire d'un mélange de monomères contenant au moins les composants suivants
(a) 60 à 99% en poids d'acide acrylique et de dérivés de l'acide méthacrylique selon la formule suivante
CH₂=C(R₁) (COOR₂) (I)
où R₁ = H ou CH₃ et R₃ une chaîne alkyle comprenant 2-20 atomes de carbone
(b) 1 à 10% en poids de monomères de vinyle, d'acryle et/ou de méthacrylate avec un groupe X apte à un couplage chimique,
selon un procédé connu en soi, de manière telle que le polyacrylate présente des groupes X libres,
- la masse autoadhésive est concentrée en une masse fondue avec une teneur en solvant < 2% en poids,
- la masse autoadhésive est mélangée en masse fondue sous une température de réaction T critique avec des particules polymères réticulées et fonctionnalisées dans un pétrin de mesure, les particules polymères contenant au moins deux groupes fonctionnels Y et Z, qui sont aptes à un couplage chimique avec le groupe fonctionnel X sous forme d'une réaction de substitution ou d'addition,
- une réaction de réticulation est réalisée **en ce que** la température de la masse autoadhésive est amenée au moins à la température de réaction T critique, de manière telle que la réaction de couplage entre le groupe fonctionnel X du polyacrylate et les groupes fonctionnels Y et Z des particules polymères est obtenue.

8. Procédé selon la revendication 7, **caractérisé en ce qu'**on utilise comme groupes fonctionnels X et/ou comme groupes fonctionnels Y et/ou Z des groupes isocyanate bloqués.

9. Procédé selon au moins l'une quelconque des revendications 7 ou 8, où le polyacrylate mélangé avec les particules polymères est revêtu avant la réaction de réticulation à partir de la masse fondue sur un matériau support.

10. Masse autoadhésive pouvant être obtenue selon un procédé selon l'une quelconque des revendications 7 à 9.

11. Utilisation d'une masse autoadhésive préparée selon un procédé selon au moins l'une quelconque des revendications 7 à 9 pour une bande adhésive monoface ou double face.
